Europäisches Patentamt

(19) European Patent Office

Office européen des brevets

(11) Numéro de publication: **0 211 702**
**B1**

(12) **FASCICULE DE BREVET EUROPEEN**

(45) Date de publication du fascicule du brevet: **23.05.90**

(51) Int. Cl.⁵: **H 04 N 5/335, G 06 K 9/56**

(21) Numéro de dépôt: **86401311.5**

(22) Date de dépôt: **17.06.86**

(54) Rétine intégrée à réseau de processeurs.

(30) Priorité: **18.06.85 FR 8509256**

(43) Date de publication de la demande:
**25.02.87 Bulletin 87/09**

(45) Mention de la délivrance du brevet:
**23.05.90 Bulletin 90/21**

(84) Etats contractants désignés:
**DE GB IT NL**

(56) Documents cités:
**FR-A-2 539 529**

**THE RADIO AND ELECTRONIC ENGINEER, vol. 50, no. 5, mai 1980, pages 249-257, Institution of Electronic and Radio Engineers, Londres, GB; S.G. CHAMBERLAIN: "Advances in c.c.d. scanners with on-chip signal processing for electronic imaging"**
**IEEE JOURNAL OF SOLID-STATE CIRCUITS, vol. SC-16, no. 3, juin 1981, pages 168-174, IEEE, New York, US; P.G.A. JESPERS et al.: "A two-chip imaging system for OCR applications"**

(73) Titulaire: **CENTRE NATIONAL DE LA RECHERCHE SCIENTIFIQUE (CNRS)**
**15, Quai Anatole France**
**F-75007 Paris (FR)**

(72) Inventeur: **Devos, Francis**
**12, rue des Chardonnerets**
**F-91940 Les Ulis (FR)**
Inventeur: **Garda, Patrick Florent**
**1, Allée de Normandie**
**F-94320 Thiais (FR)**
Inventeur: **Zavidovique, Bertrand Yves**
**1, place F. Litz**
**F-75010 Paris (FR)**

(74) Mandataire: **Joly, Jean-Jacques et al**
**CABINET BEAU DE LOMENIE 55, rue d'Amsterdam**
**F-75008 Paris (FR)**

Courier Press, Leamington Spa, England.

**Description**

La présente invention est relative à un capteur photoélectrique intégré ou rétine du type constitué par un réseau de cellules formées sur un substrat et comprenant, chacune, un élément photosensible fournissant un signal représentatif de la valeur d'un élément d'une image formée sur la rétine, un élément de conversion de ce signal en une information binaire et des moyens de mémorisation de cette information binaire.

Le domaine d'application de l'invention est celui de l'acquisition d'images et de leur traitement, notamment, mais non exclusivement, pour la reconnaissance et/ou la localisation de motifs.

Les systèmes actuels d'acquisition et de traitement d'images utilisent généralement des capteurs analogiques, tels que des réseaux de photo-diodes d'où l'information est extraite sous forme analogique pour être sérialisée, numérisée et stockée afin de constituer une image binaire sur laquelle sont effectués des traitements ultérieurs, voir par exemple la demande de brevet FR-A-2539529.

Une famille particulière d'opérateurs pour le traitement d'images binaires est constituée par les algorithmes de traitements combinatoires locaux (TCL) qui, à une image de départ, font correspondre une autre image. Les opérateurs géométriques de la morphologie mathématique plane discrète en sont les exemples les plus utilisés. La valeur binaire de chaque élément, ou pixel, de l'image d'arrivée est déterminée à partir des valeurs du pixel correspondant et de ses voisins dans l'image de départ, notamment par combinaison booléenne avec des séries d'imagettes prédéterminées selon les motifs à reconnaître ou à localiser dans l'image à traiter, les pixels des imagettes valant 0, 1 ou indifférent.

Tels qu'ils sont mis en oeuvre actuellement sur des images binarisées, les algorithmes TCL (ou d'autres opérateurs de traitement d'images) demandent des moyens de traitement importants ou spécialisés (processeurs tableaux) et sont coûteux en matériel et en temps.

Pour l'acquisition des images, il a été proposé d'intégrer, sur un même substrat, les éléments photosensibles et des moyens de conversion analogique-numérique et de mémorisation associés aux différents éléments photosensibles. Une image numérisée est ainsi directement disponible en sortie de la rétine, mais aucune économie n'est réalisée sur les moyens et les temps de traitement de l'image.

Aussi, la présente invention a-t-elle pour objet de fournir une rétine intégrée permettant de simplifier les moyens de traitement des images acquises et de diminuer de façon substantielle la durée des traitements.

La présente invention a aussi pour objet de fournir une rétine intégrée particulièrement adaptée au traitement d'images par mise en oeuvre d'algorithmes TCL.

Ces objets sont atteints au moyen d'une rétine du type défini en tête de la description et dans laquelle, conformément à l'invention:

les moyens de mémorisation sont organisés en un réseau bidimensionnel de registres à décalage pour permettre le transfert de l'information binaire d'une cellule à une cellule voisine quelconque,

chaque cellule comprend en outre un processeur élémentaire formé sur le même substrat et relié aux moyens de mémorisation de la cellule, et

les registres à décalage et processeurs élémentaires sont reliés en parallèle à des entrées de commande afin de pouvoir commander l'acquisition d'une image par mémorisation simultanée des informations binaires représentant les valeurs des éléments de cette image, la réalisation de traitements simultanés et parallèles sur les informations binaires mémorisées, et l'écriture des résultats dans les moyens de mémorisation.

Ainsi, une caractéristique essentielle de la rétine conforme à l'invention consiste dans l'intégration d'un réseau de communication bidimensionnel et de processeurs élémentaires sur le substrat même où sont formés les éléments photosensibles, les éléments convertisseurs et les moyens de mémorisation associés. Cette structure est particulièrement bien adaptée à la mise en oeuvre des algorithmes TCL. En effet, ceux-ci sont constitués d'opérations effectuées en parallèle sur les différents pixels d'une image à traiter et mettant en jeu la valeur de ces pixels et celles de leurs voisins. Aussi, par la commande en parallèle dea registres à décalage et des processeurs élémentaires, les opérations élémentaires des algorithmes TCL peuvent être réalisées dans la rétine même. Tout se passe comme si l'image de départ numérisée était déplacée devant le réseau de processeurs fixes pour amener à ceux-ci les informations binaires nécessaires à l'élaboration de la valeur de chaque pixel de l'image d'arrivée. Selon une autre particularité remarquable de l'invention, les valeurs des pixels de l'image d'arrivée sont mémorisées dans les cellules de la rétine à la place de celles des pixels de l'image de départ. Il est ainsi possible d'effectuer plusieurs transformations successives d'une image, en la réécrivant sur elle-même, ce qui autorise la réalisation d'un traitement combinatoire local complexe par décomposition de celui-ci en une séquence de traitements combinatoires locaux élémentaires. Ces derniers ne demandent qu'un processeur élémentaire de structure simple et peu emcombrante, facilement intégrable sur la rétine.

D'autres particularités et avantages de la rétine conforme à l'invention ressortiront à la lecture de la description faite ci-après, à titre indicatif mais non limitatif, en référence aux dessins annexés sur lesquels:

la figure 1 est un schéma d'un réseau constitutif d'une rétine suivant un mode particulier de réalisation de l'invention;

la figure 2 est un schéma plus détaillé d'une cellule du réseau de la figure 1;

la figure 3 est une vue en coupe partielle montrant la réalisation de l'élément photosensible;

la figure 4 est un schéma de principe du processeur élémentaire d'une cellule du réseau de la figure 1;

la figure 5 est un diagramme des temps relatif à un exemple d'utilisation du réseau de la figure 1 pour l'acquisition d'une image et un traitement élémentaire de détection de bord vertical dans cette image, et montre également les deux imagettes utilisées pour ce traitement.

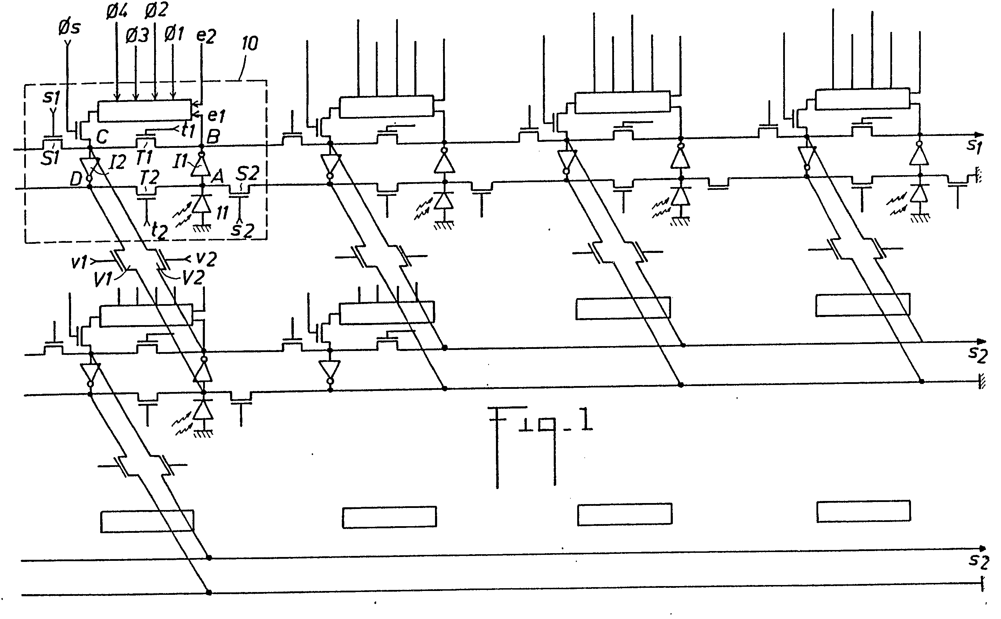

La rétine illustrée par la figure 1 est constituée par un réseau de cellules identiques 10 intégrées sur un même substrat et interconnectées.

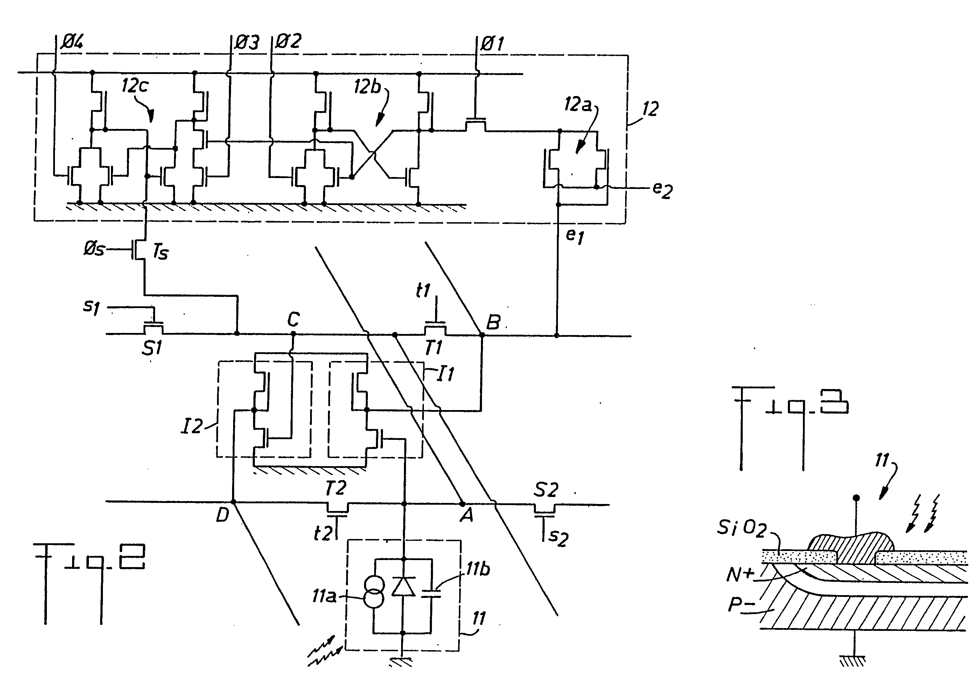

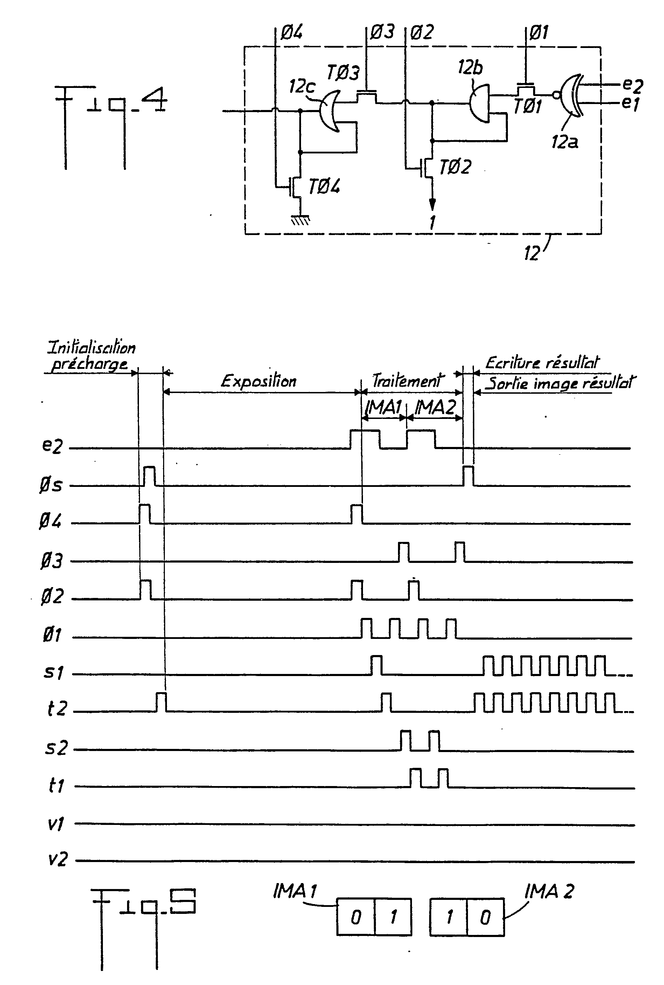

Chaque cellule 10 (figures 1 et 2) comprend un élément photosensible 11. Celui-ci peut être constitué par une photodiode qui en technologie NMOS, est par exemple réalisée par une diffusion $N^+$ dans le substrat $P^-$ (figure 3). On sait en effet que de telles diffusions, même à travers la couche de passivation ($SiO_2$), constituent des photodiodes verticales. Avantageusement, les photodiodes 11 sont matérialisées en utilisant les couches conductrices $N^+$ formées dans le substrat pour relier les cellules entre elles, comme cela sera décrit plus loin.

Sur la figure 2, la photodiode 11 est représentée avec, en parallèle, une source de courant lla et une capacité parasite 11b, entre la masse et un point de connexion A. Le courant de la source 11a est le courant d fuite de la capacité parasite 11b. Cette dernière ayant été préchargée à un niveau prédéterminé, l'intensité du courant de fuite est fonction notamment de l'intensité d'éclairement de la photodiode. Ainsi, au bout d'un temps d'exposition déterminé, le niveau de charge de la capacité llb, c'est-à-dire la tension au point A, est représentative de la valeur de l'élément d'image qui est projeté à la surface de la rétine à l'emplacement de la diode.

La tension au point A est appliquée à un circuit de conversion analogique-numérique et mémorisation comprenant un inverseur I1 branché entre le point A et un point de connexion B, deux transistors T1, T2 dont les circuits de sortie sont branchés respectivement entre le point B et un point de connexion C et entre le point A et un point de connexion D et un deuxième inverseur I2 branché entre le point C et le point D. L'inverseur I1 constitue un élément convertisseur analogique-numérique transformant la tension au point A en une information binaire prenant la valeur "0" ou la valeur "1" selon que la tension au point A est supérieure ou inférieure au seuil de fonctionnement de l'inverseur. La binarisation du pixel est donc effectuée par seuillage.

Le seuillage peut, si nécessaire, être non uniforme sur l'ensemble de la rétine. Cela est obtenu en donnant des sensibilités différentes aux ensembles photodiodes-inverseurs de binarisation selon leur emplacement dans la rétine. Plusieurs moyens peuvent être utilisés à cet effet comme, par exemple, un masquage sélectif des zones photosensibles, une différenciation des tensions de précharge dea capacités parasites, une différenciation des seuils des convertisseurs (différenciation des inverseurs I1 formés sur le substrat), ou encore une modulation des durées d'exposition. En faisant correspondre à chaque pixel de l'image à traiter non plus une cellule, mais un groupe de cellules ayant des seuils différents, il est alors possible de réaliser un codage de l'image multivalué en interprétation mais qui reste binaire en structure (B code).

Les inverseurs I1, I2 constituent, avec les transistors T1, T2, un circuit de mémorisation de l'information binaire obtenue par conversion de la tension au point A. La mémorisation est obtenue en recopiant l'information à travers les inverseurs I1, I2, par commutation alternée des transistors T1, T2 commandés par les signaux t1, t2.

Selon une caractéristique de l'invention, les circuits de mémorisation des cellules 10 sont organisés en un réseau bidimensionnel de registres à décalage. A cet effet, les cellules sont connectées, en lignes, par des transistors S1, S2 qui relient, respectivement, les points B et A d'une cellule aux points C et D de la cellule voisine à droite et, en colonnes, par des transistors V1, V2 qui relient, respectivement les points D et C d'une cellule aux points A et B de la cellule voisine du dessous. Le transfert d'information d'une cellule à une autre est commandé au moyen de signaux de commande s1, s2, t1, t2, v1, v2 appliqués aux transistors S1, S2, T1, T2, V1 et V2. Ainsi, un décalage vers la droite est commandé en fermant S1 et T2, un décalage vers la gauche en fermant T1 et S2, un décalage vers le haut en fermant V2 et T1, un décalage vers le bas en fermant T1 et V1, un décalage en diagonale vers le bas et à droite en fermant S1 et V1 et un décalage en diagonale vers le haut et à gauche en fermant V2 et S2.

Selon une autre caractéristique essentielle de l'invention, chaque cellule 10 comprend un processeur élémentaire 12 intégré sur le même substrat. Des signaux d'horloge 01, 02, 03, 04 et un signal de donnée e2 sont appliqués en parallèle aux différents processeurs au moyen de conducteurs de commande et de donnée formé sur le substrat. Chaque processeur 12 reçoit en outre, sur une deuxième entrée de donnée, l'information e1 stockée dans le circuit de mémorisation de la cellule et disponible au point B. Enfin une sortie de donnée du processeur 12 est reliée par un transistor Ts au point C du circuit de mémorisation afin de pouvoir écrire, dans ce dernier, l'information représentant le résultat du traitement effectué par le processeur. La fermeture du transistor Ts est commandée par un signal Øs.

Comme déjà indiqué, la rétine intégrée conforme à l'invention est particulièrement adaptée à la mise en oeuvre d'algorithmes de traitements combinatoires locaux (TCL). Ceux-ci peuvent être décomposés en traitements élémentaires dont la réalisation ne demande que des moyens réduits, facilement intégrables dans chaque cellule. Chacun de ces traitements élémentaires comprend, d'une façon générale, une séquence d'opérations booléennes intéressant l'information binaire représentant le pixel à traiter, les informations binaires représentant les pixels voisins et des données binaires représentant des imagettes prédéterminées en fonction d'un motif à reconnaître ou à localiser dans l'image à traiter. Chacune de ces données binaires est adressée aux différentes cellules pour effectuer les traitements voulus en parallèle dans les différentes cellules, l'image étant décalée devant le réseau de processeurs en fonction de ces traitements, en commandant les registres à décalage de façon appropriée. A la fin de chaque traitement, le résultat pour chaque pixel est écrit dans le circuit de mémorisation correspondant, en vue d'un traitement ultérieur éventuel. Ainsi, chaque image est transformée successivement sur elle-même. Le parallélisme massif et naturel d'exécution des algorithmes TCL sur tous les pixels de l'image à la fois offre de grandes puissance et rapidité de traitement. Les traitements terminés, l'information est extraite ligne par ligne, en bord de rétine, par commande des registres à décalage. Les valeurs binaires sont, pour chaque colonne, disponibles sur les bornes de sortie S1, S2, S3,... afin d'être sérialisées et mémorisées en vue de traitements ultérieurs.

Un mode de réalisation du processeur élémentaire 12 sera maintenant décrit plus en détail en référence à la figure 4. Un comparateur 12a, formé par une porte NON OU-EXCLUSIF, reçoit les signaux e1 et e2 et a sa sortie reliée par un transistor TØ1 à une entrée d'une porte ET 12b à deux entrées. La sortie de la porte 12b est reliée, d'une part, à la seconde entrée de celle-ci et, d'autre part, par un transistor TØ3, à une entrée d'une porte OU 12c à deux entrées. La sortie de la porte 12c est reliée à la seconde entrée de celle-ci et constitue la sortie de donnée du processeur 12. Des transistors TØ2 et TØ4 commandés par les signaux Ø2 et Ø4 sont branchés respectivement entre la sortie de la porte 12b et un point au niveau logique haut (1) et entre la sortie de la porte 12c et la masse (niveau 0). Les transistors TØ1 et TØ3 sont commandés par les signaux Ø1 et Ø3.

Le comparateur 12a effectue des comparaisons entre des valeurs de donnée e2 et les valeurs e1 représentant le pixel de la cellule correspondante, ou celui d'une cellule voisine après décalage de l'information. Pour chaque cellule, une phase de traitement consistant en une combinaison d'une imagette avec l'image formée sur la rétine comprend une série de comparaisons entre les pixels de l'imagette et ceux occupant des mêmes positions relatives dans l'image.

En début de traitement, la sortie de la porte ET 12b est initialisée à 1 (fermeture de TØ2). Les résultats des comparaisons successives pour le traitement d'une imagette sont transmis à la porte 12b par fermetures successives de TØ1. Tant que les résultats sont positifs (sortie du comparateur au niveau 1), la sortie de la porte 12b reste à 1, mais dès qu'un résultat est négatif (sortie du comparateur à 0), la sortie de la porte 12b passe à 0 et y reste jusqu'à la fin de la série de comparaisons correspondant au traitement de l'imagette, puisque cette sortie est rebouclée en entrée.

La pote OU 12c a sa sortie initialisée à 0 par la fermeture de TØ4. A la fin de chaque série de comparaisons, la sortie de la porte 12b est reliée à la première entrée de la porte 12c par fermeture du transistor TØ3. Si au cours du traitement de plusieurs imagettes, la sortie de la porte 12b est à 1 à la fin d'au moins une série de comparaisons (signifiant la reconnaissance du motif d'une des imagettes dans l'image formée sur la rétine), la sortie de la porte 12c passe à 1 et y reste du fait de son rebouclage en entrée.

On remarquera sur la figure 2 que la réalisation du processeur élémentaire dont le schéma de principe est montré sur la figure 4 demande un nombre de transistors peu élevé, rendant l'intégration très facile dans chaque cellule ds la rétine.

Bien entendu, d'autres modes de réalisation d'un processeur élémentaire peuvent être utilisés en vue d'effectuer les combinaisons booléennes nécessaires.

Un exemple de traitement élémentaire simple est décrit ci-après en référence à la figure 5. Il s'agit de la reconnaissance d'un bord vertical dans l'image à traiter. Les imagettes de référence sont constituées de deux pixels de valeurs différentes accolés horizontalement: une imagette IMA1 est constituée par un pixel de valeur 0 à gauche d'un pixel de valeur 1 et l'autre IMA2 par un pixel de valeur 1 à gauche d'un pixel de valeur 0 (figure 5). Les phases successives mises en oeuvre dans chaque cellule C (i, j) (ligne i, colonne j) sont les suivantes

initialisation par fermeture des transistors TØ2, TØ4 (impulsions Ø2, Ø4) puis fermeture de Ts (impulsion Øs) et de T2 (impulsion t2) pour imposer un 0 en C et un 1 en A ce qui précharge la capacité parasite de la photodiode 11;

exposition de la rétine à partir de l'ouverture de T2 (fin de la première impulsion t2);

traitement relatif à la première imagette IMA1 comprenant, après initialisation des portes 12b et 12c du processeur (impulsions Ø2 et Ø4): comparaison par la porte 12a de e2 = 1 (premier créneau de e2) et de la valeur e1 du pixel p (i, j) de la cellule C (i, j); transfert du résultat de cette comparaison en entrée de la porte 12b (impulsion Ø1 fermant TØ1); décalage à droite de l'image (impulsions s1 et t2), comparaison de e2 = 0 et de la valeur e1 du pixel p (i-1, j), transfert du résultat de cette deuxième comparaison en entrée de la porte 12b (deuxième impulsion Ø1); et transfert de la sortie de la porte 12b en entrée de la porte 12c (impulsion Ø3 fermant TØ3);

traitement relatif à la deuxième imagette IMA2 comprenant, après ré-initialisation de la porte 12b (impulsion Ø2): décalage à gauche de l'image (impulsions s2 et t1); comparaison de e2 = 1 avec la valeur e1 du pixel p (i, j); transfert du résultat à l'entrée de la porte 12b; nouveau décalage à gauche; comparaison de e2 = 0 avec la valeur du pixel p (i+1, j); transfert du résultat en entrée de la porte 12b; et transfert de la sortie de la porte 12b en entrée de la porte 12c; et

écriture du résultat dans le circuit de mémorisation par fermeture de Ts et sortie de l'image d'arrivée en bord de rétine par décalages à droite successifs (trains s1 et t2).

On notera que la fin de l'exposition de l'image correspond à l'instant de la première comparaison de l'information binaire e1 avec une donnée e2 puisqu'ensuite le circuit de mémorisation est chargé avec l'information binaire d'une cellule voisine (décalage).

A partir de cet exemple, on comprendra que différents algorithmes TCL peuvent être mis en oeuvre, y compris les plus complexes, dans la mesure où ils auront été décomposés en une séquence de traitements élémentaires réalisables au moyen des processeurs 12.

Mais la rétine conforme à l'invention permet aussi des opérations autres que les algorithmes TCL. Par exemple, une détection de déplacement peut être réalisée en exposant une image, en l'inversant, en la ré-exposant et en détectant l'existence de pixels de valeur 1 dans l'image obtenue. Il est possible par ailleurs de charger la rétine avec une image non vierge introduite ligne par ligne en agissant sur les registres à décalage.

**Revendications**

1. Rétine intégrée constituée par un réseau de cellules (10) formées sur un substrat et comprenant, chacune, un élément photosensible (11) fournissant un signal représentatif de la valeur d'un élément d'une image formée sur la rétine, un élément de conversion de ce signal en une information binaire et des moyens de mémorisation de cette information binaire, caractérisée en ce que:

les moyens de mémorisation (I1, I2, T1, T2) sont organisés en un réseau bidimensionnel de registres à décelage pour permettre le transfert de l'information binaire d'une cellule (10) à une cellule voisine quelconque,

chaque cellule comprend en outre un processeur élémentaire (12) formé sur le même substrat et relié au moyen de mémorisation de la cellule, et

les registres à décalage et processeurs élémentaires sont reliés en parallèle à des entrées de commande afin de pouvoir commander l'acquisition d'une image par mémorisation simultanée des informations binaires représentant les valeurs des éléments de cette image, la réalisation de traitements simultanés et parallèles sur les informations binaires mémorisées, et l'écriture des résultats dans les moyens de mémorisation.

2. Rétine selon l'une quelconque des revendications 1 et 2, caractérisée en ce que les moyens de mémorisation d'une cellule sont reliés à ceux des cellules voisines de la même ligne et de la même colonne.

3. Rétine selon l'une quelconque des revendications 1 et 2, caractérisée en ce que les processeurs élémentaires (12) comprennent: au moins une première entrée de donnée (e2) par laquelle une même donnée est transmise en parallèle et simultanément aux processeurs; une deuxième entrée de donnée (e1) reliée aux moyens de mémorisation correspondants; une sortie de donnée reliée également aux moyens de mémorisation correspondants à travers un élément interrupteur (Ts) à fermeture commandée; et au moins une entrée de commande par laquelle un même signal de commande est appliqué en parallèle et simultanément aux processeurs.

4. Rétine selon l'une quelconque des revendications 1 à 3, caractérisée en ce que l'élément photosensible (11) de chaque cellule (10) est constitué par une photodiode dont le niveau de charge de la capacité parasite associée constitue le signal représentatif de la valeur de l'élément d'image correspondant.

5. Rétine selon la revendication 4, caractérisée en ce qu'elle comporte des moyens de précharge de ladite capacité à un niveau prédéterminé avant exposition de la rétine.

6. Rétine selon l'une quelconque des revendications 1 à 5, caractérisée en ce que l'élément de conversion analogique numérique est un élément à seuil (I1).

7. Rétine selon la revendication 6, caractérisée en ce que le seuillage est non uniforme dans l'ensemble de la rétine.

**Patentansprüche**

1. Integrierte Netzhaut, die aus einem auf einem Substrat ausgebildeten Netz von Zellen (10) aufgebaut ist, von denen jede ein photosensibles Element (11), das ein den Wert eines auf der Netzhaut gebildeten Bildelementes darstellendes Signal liefert, ein Element zur Umwandlung dieses Signals in eine Binärinformation und Einrichtungen zur Speicherung dieser Binärinformation aufweist, dadurch gekennzeichnet, daß

die Speichereinrichtungen (I1, I2, T1, T2) in einem zweidimensionalen Netz von Schieberegistern geordnet sind, damit die Binärinformation einer Zelle (10) an irgendeine benachbarte Zelle übertragen werden kann,

jede Zelle außerdem einen Elementarprozessor (12) aufweist, der auf demselben Substrat ausgebildet ist und mit der Speichereinrichtung der Zelle verbunden ist, und

die Schieberegiester und Elementarprozessoren an Steuereingängen parallel verbunden sind, damit die Bilderfassung mittels gleichzeitiger Speicherung der die Werte der Elemente dieses Bildes darstellenden Binärinformationen, die Ausführung der gleichzeitigen und parallelen Bearbeitung der gespeicherten Binärinformationen und das Schreiben der Ergebnisse in die Speichereinrichtungen gesteuert werden können.

2. Netzhaut gemäß Anspruch 1, dadurch gekennzeichnet, daß die Speichereinrichtungen einer Zelle mit denjenigen der benachbarten Zellen derselben Reihe und derselben Spalte verbunden sind.

3. Netzhaut gemäß einem der Ansprüche 1 oder 2, dadurch gekennzeichnet, daß die Elementarprozessoren (12) wenigstens einen ersten Dateneingang (e2), über den die gleichen Daten parallel und gleichzeitig zwischen den Prozessoren übertragen werden, einen zweiten Dateneingang (e1), der mit entsprechenden Speichereinrichtungen verbunden ist, einen Datenausgang, der über ein Schalterelement (Ts) mit gesteuertem Verschluß ebenfalls mit entsprechenden Speichereinrichtungen verbunden ist, und wenigstens einen Steuereingang, über den ein gleiches Steuerssignal parallel und gleichzeitig in die Prozessoren eingegeben wird, aufweisen.

4. Netzhaut gemäß einem der Ansprüche 1 bis 3, dadurch gekennzeichnet, daß das photosensible Element (11) einer jeden Zelle (10) von einer Photodiode aufgebaut wird, deren Ladungsniveau der zugehörigen Streukapazität das den Wert des entsprechenden Bildelementes darstellende Signal bildet.

5. Netzhaut gemäß Anspruch 4, dadurch gekennzeichnet, daß sie Einrichtungen aufweist, die die genannte Kapazität vor der Belichtung der Netzhaut auf ein vorgegebenes Niveau vorbelasten.

6. Netzhaut gemäß einem der Ansprüche 1 bis 5, dadurch gekennzeichnet, daß das Analog/Digital-Wandlerelement ein Schwellenwertglied (I1) ist.

7. Netzhaut gemäß Anspruch 6, dadurch gekennzeichnet, daß die Schwelle in der Netzhautanordnung nicht einheitlich ist.

**Claims**

1. An integrated photoelectric detector comprising a network of cells (10) formed on a substrate and each comprising a photosensitive element (11) delivering a signal representing the value of an element of an image formed on the detector, an element for converting said signal into binary data and means for storing said binary data, characterised in that:
the storage means (I1, I2, T1, T2) are arranged as a two-dimensional network of shift registers to allow the binary data to be transferred from one cell (10) to any neighbouring cell,
each cell also comprises an elementary processor (12) formed on the same substrate and connected to the cell storage means, and
the shift registers and elementary processors are connected in parallel to control inputs for controlling the acquisition of an image by simultaneous storage of the binary data representing the values of the elements of said image, the performance of simultaneous and parallel processing on the stored binary data, and the writing of the results into the storage means.

2. An integrated photoelectric detector according to claim 1 or 2, characterised in that the storage means of a cell are connected to those of tha neighbouring cells of the same line and of the same column.

3. An integrated photoelectric detector according to claim 1 or 2, characterised in that the elementary processors (12) comprise: at least one first data input (e2) by means of which one and the same data item is transmitted in parallel and simultaneously to the processors; a second data input (e1) connected to the corresponding storage means; a data output also connected to the corresponding storage means via a controlled-make switch element (Ts); and at least one control input via which one and the same control signal is applied in parallel and simultaneously to the processors.

4. An integrated photoelectric detector according to any one of claims 1 to 3, characterised in that the photosensitive element (11) of each cell (10) comprises a photodiode, of which the charge level of the associated stray capacity constitutes the signal which represents the value of the corresponding image element.

5. An integrated photoelectric detector according to claim 4, characterised in that it comprises means for pre-charging said capacity to a predetermined level before exposure of the detector.

6. An integrated photoelectric detector according to any one of claims 1 to 5, characterised in that the analogue-digital conversion element is a threshold element (11).

7. An integrated photoelectric detector according to claim 6, characterised in that the thresholding is non-uniform throughout the detector.

EP 0 211 702 B1

Øs  Ø4  Ø2  Ø3  Ø1  e2  10

s1

e1

C  t1  B

S1  I2  T1  I1  A  S2

D  T2  11

t2  s2

v1  V1  v2  V2

s1

s2

s2

Fig.1

Fig. 3

Fig. 2

Fig.4

Fig.5

IMA1

| 0 | 1 |

IMA 2

| 1 | 0 |